# EUROPÄISCHE PATENTANMELDUNG

(11) **EP 4 432 380 A1**
(43) Veröffentlichungstag der Anmeldung: **18.09.2024**
(21) Anmeldenummer: 23161515.4
(22) Anmeldetag: 13.03.2023
(51) Int. Cl.: H01M 4/04, H01M 10/04

(54) **MARKIERUNGSVERFAHREN EINER ELEKTRODENFOLIE BEI EINER ELEKTRODENFERTIGUNG FÜR EINE BATTERIEZELLE**

(71) Anmelder: Siemens Aktiengesellschaft, 80333 München (DE)
(72) Erfinder: Schulte, Sascha, 91315 Höchstadt (DE); Dongmeza Noumedem, Loic, 67659 Kaiserslautern (DE); Fey, Thomas, 90768 Fürth (DE); Kilic, Musa, 90459 Nürnberg (DE)
(74) Vertreter: Siemens Patent Attorneys

(57) **Zusammenfassung**

Es wird ein Verfahren zur Markierung wenigstens eines Abschnitts einer Elektrodenfolie bei einer Elektrodenfertigung für eine Batteriezelle vorgeschlagen, wobei der Abschnitt der Elektrodenfolie (1) wenigstens ein Elektrodenmaterial (2) und eine Metallfolie (3) umfasst, die jeweils aus einem oder mehreren Rohmaterialen hergestellt sind. Das erfindungsgemäße Verfahren ist gekennzeichnet dadurch, dass eine Markierung (4) auf der Metallfolie (3) angeordnet wird, die zur Identifikation der für den Abschnitt verwendeten Rohrmaterialen ausgebildet ist.

Weiterhin betrifft die Erfindung ein Halbfabrikat (10) für eine Elektrodenfertigung einer Batteriezelle.

## Beschreibung

Die Erfindung betrifft ein Verfahren gemäß dem Oberbegriff des Patentanspruches 1 sowie eine Vorrichtung gemäß dem Oberbegriff des Patentanspruches 10.

Bei einer Herstellung von Batteriezellen werden bei einigen Typen, beispielsweise bei Pouch-Zellen, einzelne Folien (englisch: Sheets) zu einem Stapel gefügt und an den Ableitern zusammengeschweißt. Hierbei werden die Elektrodenfolien aus sehr langen Elektrodenbahnen geschnitten, die in vorgelagerten Prozessschritten gefertigt werden, das heißt beispielsweise mit einer Elektrodenpaste und einer Metallfolie beschichtet werden. Bei anderen Zelltypen werden Stücke der Rolle zu Zellen gewickelt. Die erfolgt gemäß analogen Produktionsprozessen.

Bei der vorbereitenden Fertigung der Elektrodenbahnen werden - vereinfacht dargestellt - Rohmaterialien zu einer Paste verrührt und diese wird auf die Metallfolie als Beschichtung aufgebracht. Dabei werden die verschiedenen Rohstoffe meist in abgepackten Einheiten, beispielsweise eine Kupferfolie als Rolle, Lösemittel und Grafit in Fässern, für den Prozess bereitgestellt.

Typischerweise sind die Gebindegrößen der verwendeten Rohmaterialien uneinheitlich, sodass nicht eindeutig ist, welches Rohrmaterial von welcher Rolle oder aus welchem Fass verwendet wurde.

Dadurch kann im späteren Produktionsverlauf an den aus der Elektrodenbahn geschnittenen Abschnitten der Elektrodenfolien beziehungsweise Elektrodenstücken nicht mehr erkannt werden, welches Rohmaterialen, beispielsweise welche Mischparamater eines Pastenbehälters, für den jeweiligen Abschnitt verwendet wurden. Dadurch können Fehler, Abweichung oder sonstige Qualitätseinflüsse der Rohmaterialien und Mischprozesse dem später auftretenden Verhalten einer Batteriezelle nicht mehr zugeordnet werden.

Bei bekannten Herstellungsprozessen wird neben den Folien, das heißt nicht auf den Folien, sondern auf einem Verschnitt der Elektrodenbahn eine Markierung angebracht. Diese steht jedoch nach dem Schneiden der Elektrodenbahn in die einzelnen Elektrodenabschnitte beziehungsweise Elektrodenstücke nicht mehr zur Verfügung.

Weiterhin wäre es denkbar, dass jedes Element, jede Folie und jedes Rohmaterial per Computer und Kameras automatisch durch den Produktionsprozess verfolgt und dokumentiert wird. Dies ist jedoch sehr aufwändig und an schlecht einsehbaren oder gegebenenfalls durch manuelle Arbeit an definierten Positionen fehleranfällig.

Der vorliegenden Erfindung liegt die Aufgabe zugrunde, eine verbesserte Zuordnung von Batteriezelle und verwendetem Rohmaterial zu ermöglichen.

Die Aufgabe wird durch ein Verfahren mit den Merkmalen des unabhängigen Patentanspruches 1 sowie durch ein Halbfabrikat mit den Merkmalen des unabhängigen Patentanspruches 10 gelöst. In den abhängigen Patentansprüchen sind vorteilhafte Ausgestaltungen und Weiterbildungen der Erfindung angegeben.

Das erfindungsgemäße Verfahren zur Markierung wenigstens eines Abschnitts einer Elektrodenfolie bei einer Elektrodenfertigung für eine Batteriezelle, wobei der Abschnitt der Elektrodenfolie wenigstens eine Elektrodenmaterial und eine Metallfolie umfasst, die jeweils aus einem oder mehreren Rohmaterialen hergestellt sind, ist gekennzeichnet dadurch, dass eine Markierung auf der Metallfolie angeordnet wird, die zur Identifikation der für den Abschnitt verwendeten Rohrmaterialen ausgebildet ist.

Eine Markierung kann ein maschinenlesbarer Identifikationscode sein, der eine eindeutige Zuordnung zwischen dem jeweiligen Abschnitt und den für diesen Abschnitt verwendeten Rohmaterialen, insbesondere für das Elektrodenmaterial und die Metallfolie, ermöglicht.

Die Elektrodenfolie kann ebenfalls als Elektrodenstück ausgebildet sein. Die Elektrodenfolie weist wenigstens ein Elektrodenmaterial, typischerweise eine Elektrodenpaste, sowie wenigstens eine Metallfolie auf. Hierbei ist die Elektrodenpaste typischerweise in Form einer Beschichtung auf die Metallfolie aufgebracht. Typischerweise weist die Elektrodenfolien einen komplexerer Aufbau mit weiteren Komponenten, insbesondere mit einem Aktivmaterial, einem Separator und/oder einem Stromsammler der Gegenelektrode auf. Die genannten Komponenten werden aus Rohmaterialen hergestellt, wobei die Markierung ebenfalls dazu ausgebildet sein kann, die Rohrmaterialen der genannten weiteren Komponenten für den jeweiligen Abschnitt zu kodieren.

Die Metallfolie kann eine Kupferfolie sein, die insbesondere als Stromsammler ausgebildet ist.

Gemäß der Erfindung wird die Markierung auf der Metallfolie angeordnet beziehungsweise aufgebracht. Hierbei ist die Markierung zur Identifikation der für den Abschnitt verwendeten Rohmaterialen ausgebildet. Hierzu ist die Markierung ebenfalls im jeweiligen Abschnitt angeordnet. Die Markierung wird beispielsweise noch vor dem Schneiden in die einzelnen Abschnitte aufgebracht.

Weiterhin kann die Markierung mittels einer entsprechenden Leseeinheit in weiteren Produktionsschritten erfasst und ausgewertet werden, wobei die Leseeinheit mittels einer entsprechenden Datenbank, welche die für jede Markierung beziehungsweise für jeden Code und somit für jeden Abschnitt hinterlegten Rohmaterialen umfasst.

Erfindungsgemäß ist die Markierung auf der Metallfolie angeordnet. Vorteilhafterweise kann die Metallfolie im Gegensatz zum Elektrodenmaterial, beispielsweise einer Elektrodenpaste, besonders gut beschriftet werden. Weiterhin hat das Anordnen, beispielsweise durch ein Aufbringen oder Anbringen, der Markierung auf der Metallfolie den Vorteil, dass dadurch die elektrochemischen Eigenschaften des Elektrodenmaterials nicht in ihrer Funktion beeinträchtigt werden. Das Aufbringen eines Farbauftrags oder einer Lasermarkierung beeinflusst die Metallfolie in ihrer Funktion hingegen vorteilhafterweise nicht.

Die erfindungsgemäße Markierung ermöglicht es somit, die für jeden Abschnitt verwendeten Rohmaterialen zu identifizieren, insbesondere nach dem Zuschnitt der Elektrodenbahnen. Somit wird eine sichere und im Wesentlichen kostenneutrale Markierung, Identifikation und Rückverfolgbarkeit einzelner Elektrodenfolien (Sheets) beziehungsweis Abschnitte/Teilabschnitte/Teilstücke der Elektrodenbahn ermöglicht.

Das erfindungsgemäße Halbfabrikat für eine Elektrodenfertigung einer Batteriezelle, umfassend einen Abschnitt einer Elektrodenfolie, der wenigstens eine Elektrodenmaterial und eine Metallfolie umfasst, die jeweils aus einem oder mehreren Rohmaterialen hergestellt sind, ist dadurch gekennzeichnet, dass eine Markierung auf der Metallfolie angeordnet ist, die zur Identifikation der für den Abschnitt verwendeten Rohrmaterialen ausgebildet ist.

Es ergeben sich zum erfindungsgemäßen Verfahren gleichartige, gleichwertige und gleichwirkende Vorteile und/oder Ausgestaltungen der erfindungsgemäßen Vorrichtung.

Gemäß einer bevorzugten Ausgestaltung der Erfindung weist die Metallfolie einen Zellableiter auf, wobei die Markierung auf dem Zellableiter angebracht wird.

Mit anderen Worten weist die Metallfolie bevorzugt einen Zellableiter auf, wobei die Markierung auf dem Zellableiter angeordnet ist.

Der Zellableiter ist für das Anbringen der Markierung besonders vorteilhaft. Der Zellableiter weist typischerweise eine reine Metalloberfläche auf, die besonders gut beschriftet werden kann. Weiterhin ist der Zellableiter stets mit der jeweiligen Elektrodenfolie verbunden und wird nicht, beispielsweise als Verschnitt, von dieser getrennt.

Ein weiterer Vorteil der Anordnung an einem der Zellableitern ist, dass diese typischerweise für die weiteren Prozessschritte einen freiliegenden Bereich aufweisen, der für die jeweilige Markierung bevorzugt verwendet werden kann.

In einer vorteilhaften Weiterbildung der Erfindung wird die Markierung in einem Schweißbereich des Zellableiters angebracht, der für eine Verschweißung mit weiteren Zellableitern vorgesehen ist.

Mit anderen Worten ist die Markierung besonders bevorzugt in einem Schweißbereich des Zellableiters angeordnet, der für eine Verschweißung mit weiteren Zellableitern der Batteriezelle vorgesehen ist.

Typischerweise werden mehrere Zellableiter einer Batteriezelle in einem Schweißbereich zusammengeschweißt. Dieser Bereich ist somit ebenfalls freiliegend, das heißt frei von Elektrodenmaterial, und kann somit bevorzugt für die Markierung verwendet werden. Mit anderen Worten weisen typischerweise alle Zellen, ob aus gestapelten Folien oder aus gewickelten Teilstücken hergestellt, einen Bereich auf, an dem die reinen Metallfolien zu einem späteren Zeitpunkt miteinander und mit dem aus der Zelle herausgeführten Zellableitern verschweißt werden. Dieser Bereich wird vorteilhafterweise für die Markierung beziehungsweise die Markierungen verwendet. Dadurch wird wenigstens ein Zellableiter zur Markierung der Abschnittes der Elektrodenfolie verwendet, beispielsweise indem dort zu Beginn der Produktion, das heißt noch vor dem Schneiden der Bahnen, eine Markierung/Code angeordnet wird, beispielsweise mittels Aufdrucken und/oder Auflasern. Dieser Identifikationscode kann bei weiteren Produktionsschritten sichtbar sein und kann als Parameter von der jeweiligen Produktionsanlage gelesen werden.

Nach Abschluss des Schweißvorganges sind die Markierungen der einzelnen Elektrodenfolien, oder bei einer Wicklung die Markierung auf dem jeweiligen Elektrodenteilstück, typischerweise nicht mehr lesbar. Denkbar ist ebenfalls, dass die Markierung vollständigt durch den Schweißvorgang verschwindet. Dadurch liegt eine temporäre Markierung vor, die lediglich für den Porduktionsprozess eine Zuordnung von Abschnitt und verwendetet Rohmaterialen ermöglicht. Nach dem Schweißvorgang wird jede Batteriezelle typischerweise mit einer Identifikationsnummer versehen, die dann zur weiteren Identifkation verwendet werden kann. Es ist somit erfindungsgemäß nicht erforderlich, dass die Markierung dauerhaft ist und/oder an den fertigen Batteriezellen vorhanden beziehungsweise lesbar ist. Das automatische Entfernen oder Zestören der Markierung beziehungsweise der Markierungen beim Schweißvorgang hat den Vorteil, dass keine weiteren negativen Effekte durch die Markierung entstehen können.

Gemäß einer voreilhaften Ausgestaltung der Erfindung wird die die Markierung in einem Biegebereich des Zellableiters angebracht.

Mit anderen Worten ist die Markierung besonders bevorzugt in einem Biegebereich des Zellableiters angeordnet.

Typischerweise ist es zum Verschweißen der Zellableiter erforderlich diese zueinander zu einem gemeinsamen Zellableiter zu verbiegen und zu verpressen. Dadurch können die freiliegenden Teilbereiche der Zellableiter in einen Biegebereich und einen Schweißbereich beziehungsweise eine Schweißfläche eingeteilt werden. Somit weisen die Zellableiter typischerweise einen ebenfalls freiliegenden, das heißt einen offenen Biegebereich auf. Es ist vorteilhaft den Biegebereich für die Markierung zu verwenden. Das ist deshalb der Fall, da der Bereich der Biegung keine weitere Funktion hat, sodass innerhalb des genannten Bereiches eine Markierung für den Betrieb der Batteriezelle nicht störend ist.

In einer vorteilhaften Weiterbildung der Erfindung liegen/liegt in den genannten Bereichen der Zellableiter und/oder die Metallfolie frei.

Dadurch kann vorteilhafterweise die Markierung leichter angebracht werden. Weiterhin hat die Markierung in den freiliegenden Bereichen einen geringeren bis keinen nachtteiligen Einfluss auf das Betriebsverhalten der Batteriezelle.

Gemäß einer vorteilhaften Ausgestaltung der Erfindung wird die Markierung auf einer Stirnfläche des Zellableiters angebracht.

Mit anderen Worten ist die Markierung bevorzugt auf einer Stirnfläche des Zellableiters angeordnet.

Vorteilhafterweise kann die Markierung insbesondere beim Verschweißen der Zellableiter entfernt beziehungsweise zerstört werden. Dadurch wird vorteilhafterweise eine temporäre Markierung ausgebildet, sodass weiterhin störende Einflüsse auf die fertige Batteriezelle verhindert werden können.

Hierbei ist es besonders bevorzugt, wenn die Markierung innerhalb eines Eckbereiches der Stirnfläche oder mittig innerhalb der Stirnfläche angebracht wird.

Mit anderen Worten ist die Markierung bevorzugt innerhalb eines Eckbereiches der Stirnfläche oder mittig innerhalb der Stirnfläche angeordnet.

In einer vorteilhaften Weiterbildung der Erfindung wird die Markierung aufgedruckt und/oder aufgelasert.

Dadurch kann die Markierung besonders effizient und schnell aufgebracht werden. Die Markierung kann beispielsweise durch einen Laser aufgelasert werden.

Gemäß einer vorteilhaften Ausgestaltung der Erfindung wird die Markierung vor einem Schneiden der Elektrodenfolie in mehrere Teilstücke angebracht.

Dadurch wird das Zuordnen der Rohmaterialen zu den einzelnen Abschnitten verbessert.

Weitere Vorteile, Merkmale und Einzelheiten der Erfindung ergeben sich aus den im Folgenden beschriebenen Ausführungsbeispielen sowie anhand der Zeichnungen. Dabei zeigen schematisiert:
- Figur 1: eine Seitenansicht eines Halbfabrikats gemäß einer Ausgestaltung der Erfindung; und
- Figur 2: mehrere verschiedene Anordnungen einer Markierung auf einem Zellableiter einer Batteriezelle;

Gleichartige, gleichwertige oder gleichwirkende Elemente können in einer der Figuren oder in den Figuren mit denselben Bezugszeichen versehen sein.

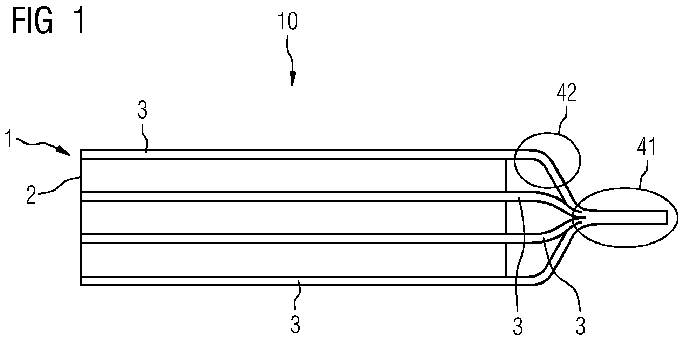

Die Figur 1 zeigt eine vereinfachte Darstellung eines Stapels mehrerer Elektroden beziehungsweise Elektrodenfolien 1, das heißt ein Halbfabrikat 10 einer Batteriezelle für beziehungsweise bei einer Batteriezellenherstellung.

Die Elektrodenfolien 1 weisen wenigstens jeweils ein Elektrodenmaterial 2 sowie eine Metallfolie 3 auf. Das Elektrodenmaterial 2 kann weiterhin eine Elektrodenstruktur ausbilden, die typischerweise weitere in der Figur 1 nicht dargestellte Komponenten, insbesondere ein Aktivmaterial, einen Separator und/oder einen Stromsammler der Gegenelektrode umfasst. Somit ist das Elektrodenmaterial 2 beziehungsweise die Elektrodenstruktur 2 vorliegend vereinfacht zusammengefasst.

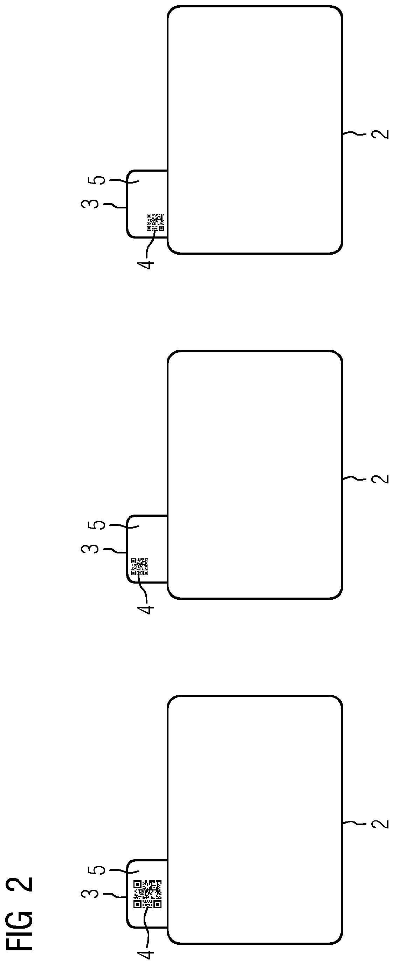

Mit anderen Worten ist in der Figur 1 das Elektrodenmaterial 2 deutlich vereinfacht dargestellt. Typischerweise umfasst das Elektrodenmaterial 2 beziehungsweise die Elektrodenstruktur 2 in mehreren Schichten wiederholend abwechselnd eine Anodenfolie, eine Anodenbeschichtung, einen Separator, eine Kathodenbeschichtung sowie eine Kathodenfolie, sodass dadurch das Elektrodenmaterial 2 tatsächlich eine weitaus komplexere Struktur als in der Figur 1 dargestellt aufweist. Dasselbe gilt für Figur 2.

Die Metallfolie 3 ist vorliegend als Kupferfolie ausgebildet und bildet einen Stromsammler beziehungsweise einen Zellableiter 3 einer Elektrode der Batteriezelle aus. Jede der Elektrodenfolien 1 weist einen solchen Zellableiter 3, das heißt eine Metallfolie beziehungsweise Kupferfolie 3, auf.

Die Zellableiter 3 weisen einen bezüglich des Elektrodenmaterials 3 freiliegenden Bereich auf, der in einen Schweißbereich 41 und einen Biegebereich 42 einteilbar ist. Innerhalb des Biegebereiches 42 sind die Zellableiter 3 zueinander zu einem gemeinsamen Zellableiter gebogen. Innerhalb des Schweißbereiches 42 sind diese zum gemeinsamen Zellableiter verschweißt, beispielsweise mittels eines Ultraschallschweißverfahrens.

Besonders bevorzugt wird eine Markierung beziehungsweise ein Code zur Identifikation der für die Elektrodenfolien 1 verwendeten Rohmaterialen innerhalb des Schweißbereiches 41 und/oder der Biegebereiches 42 eines oder mehrerer der Zellableiter 3 angeordnet, beispielsweise mittels eines Aufdruckes und/oder einem Auflasern aufgebracht. Die Zellableiter 3 bilden typischerweise reine Metallflächen aus, sodass innerhalb der genannten freiliegenden Bereichen 41, 42 die Markierung besonders bevorzugt aufgebracht werden kann.

Durch die Markierung wird eine Identifikation der verwendeten Rohmaterialen, beispielsweise durch eine Produktionsanlage der Batteriezellenherstellung, ermöglicht. Durch das Anbringen der Markierung im Schweißbereich 41 und/oder im Biegebereich 42 kann ein negativer Einfluss der Markierung auf das spätere Betriebsverhalten der Batteriezelle beziehungsweise der fertigen Batterie möglichst minimiert bis ausgeschlossen werden.

Die Figur 2 zeigt mehrere mögliche Anordnungen einer Markierung 4 auf einem Zellableiter 3 einer Elektrode.

Die Markierung 4 ist dazu vorgesehen, das Rohmaterial, aus welchem der Zellableiter 3 sowie ein Elektrodenmaterial 2 hergestellt wurden, zu identifizieren beziehungsweise dem jeweiligen Abschnitt zuzuordnen.

Hierbei ist die Markierung 4 an einer Stirnfläche 5 des Zellableiters 3 angeordnet. Die Markierung 4 ist im dargestellten Ausführungsbeispiel als QR-Code ausgebildet.

In der Figur 2 sind drei verschiedene Anordnungen der Markierung 4 auf der Stirnfläche 5 des Zellableiters 3 dargestellt. Hierbei kann die Markierung 4 mittig bezüglich der Stirnfläche 5 oder innerhalb eines Eckbereiches der Stirnfläche 5 angeordnet sein. Vorliegend ist die Markierung 4 mittig oder in einem linken oberen Eckbereich oder in einem linken unteren Eckbereich der im Wesentlichen rechteckförmigen Stirnfläche angeordnet.

Die genannten Anordnungen der Markierungen 4 auf dem Zellableiter 3 weisen insbesondere den Vorteil auf, dass nach einem Abschluss des Schweißvorganges die Markierungen 4 der einzelnen Elektrodenfolien, oder bei einer Wicklung die einzelne Markierungen 4 auf den Elektrodenstücken, nicht mehr lesbar sind. Bei einer Markierung 4 innerhalb der Schweißfläche 41, wie in Figur 2 dargestellt, verschwindet diese beim Schweißvorgang ganz, sodass eine temporäre Markierung 4 vorliegt. Anstelle der erfindungsgemäß vorgesehenen Einzelfolienmarkierung 4 kann anschließend die Identifikationsnummer der jeweiligen Batteriezelle, in welcher der Stapel eingebaut ist, für die weitere Identifikation verwendet werden.

Somit unterscheidet sich die Markierung 4 der Zellableiter 3 von beispielsweise einer denkbaren Markierung auf der beschichteten Fläche, das heißt einer auf dem Elektrodenmaterial angeordneten Markierung. Das Elektrodenmaterial muss an jeder Stelle elektrochemisch aktiv sein und würde durch eine Markierung, beispielsweise einen Farbauftrag oder eine Lasermarkierung, in Teilen seine Funktion verlieren. Die vorliegende Markierung auf den Zellableiter 3, insbesondere innerhalb der freiliegenden Bereiche des Zellableiters 3, verhindert somit den genannten Funktionsverlust des Elektrodenmaterials.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- 1: Elektrodenfolie
- 2: Elektrodenmaterial/-struktur
- 3: Metallfolie/Ableiter
- 4: Markierung
- 5: Stirnfläche
- 10: Halbfabrikat
- 41: Schweißbereich
- 42: Biegebereich

## Patentansprüche

1. Verfahren zur Markierung wenigstens eines Abschnitts einer Elektrodenfolie bei einer Elektrodenfertigung für eine Batteriezelle, wobei der Abschnitt der Elektrodenfolie (1) wenigstens ein Elektrodenmaterial (2) und eine Metallfolie (3) umfasst, die jeweils aus einem oder mehreren Rohmaterialen hergestellt sind, **gekennzeichnet dadurch, dass** eine Markierung (4) auf der Metallfolie (3) angeordnet wird, die zur Identifikation der für den Abschnitt verwendeten Rohrmaterialen ausgebildet ist.

2. Verfahren gemäß Anspruch 1, **gekennzeichnet dadurch, dass** die Metallfolie (3) einen Zellableiter (3) aufweist, wobei die Markierung (4) auf dem Zellableiter (3) angebracht wird.

3. Verfahren gemäß Anspruch 2, **gekennzeichnet dadurch, dass** die Markierung in einem Schweißbereich (41) des Zellableiters (3) angebracht wird, der für eine Verschweißung mit weiteren Zellableitern (3) vorgesehen ist.

4. Verfahren gemäß Anspruch 2 oder 3, **gekennzeichnet dadurch, dass** die Markierung (4) in einem Biegebereich (42) des Zellableiters (3) angebracht wird.

5. Verfahren gemäß Anspruch 3 oder 4, **gekennzeichnet dadurch, dass** in den genannten Bereichen (41, 42) der Zellableiter (3) und/oder die Metallfolie (3) freiliegt/freiliegen.

6. Verfahren gemäß einem der Ansprüche 2 bis 5, **gekennzeichnet dadurch, dass** die Markierung (4) auf einer Stirnfläche (5) des Zellableiters (3) angebracht wird.

7. Verfahren gemäß Anspruch 6, **gekennzeichnet dadurch, dass** die Markierung (4) innerhalb eines Eckbereiches der Stirnfläche (5) oder mittig innerhalb der Stirnfläche (5) angebracht wird.

8. Verfahren gemäß einem der vorhergehenden Ansprüche, **gekennzeichnet dadurch, dass** die Markierung (4) aufgedruckt und/oder aufgelasert wird.

9. Verfahren gemäß einem der vorhergehenden Ansprüche, **gekennzeichnet dadurch, dass** die Markierung (4) vor einem Schneiden der Elektrodenfolie (1) in mehrere Teilstücke angebracht wird.

10. Halbfabrikat (10) für eine Elektrodenfertigung einer Batteriezelle, umfassend einen Abschnitt einer Elektrodenfolie (1), der wenigstens ein Elektrodenmaterial (2) und eine Metallfolie (3) umfasst, die jeweils aus einem oder mehreren Rohmaterialen hergestellt sind, **dadurch gekennzeichnet, dass** eine Markierung (4) auf der Metallfolie (3) angeordnet ist, die zur Identifikation der für den Abschnitt verwendeten Rohrmaterialen ausgebildet ist.

11. Halbfabrikat (10) gemäß Anspruch 10, **dadurch gekennzeichnet, dass** die Metallfolie (3) einen Zellableiter (3) aufweist, wobei die Markierung (4) auf dem Zellableiter (3) angeordnet ist.

12. Halbfabrikat (10) gemäß Anspruch 11, **dadurch gekennzeichnet, dass** die Markierung (4) in einem Schweißbereich (41) des Zellableiters (3) angeordnet ist, der für eine Verschweißung mit weiteren Zellableitern (3) vorgesehen ist.

13. Halbfabrikat (10) gemäß Anspruch 11 oder 12, **dadurch gekennzeichnet, dass** die Markierung (4) in einem Biegebereich (42) des Zellableiters (3) angeordnet ist.

14. Halbfabrikat (10) gemäß einem der Ansprüche 11 bis 13, **dadurch gekennzeichnet, dass** die Markierung (4) auf einer Stirnfläche (5) des Zellableiters (3) angeordnet ist.

15. Halbfabrikat (10) gemäß Anspruch 14, **dadurch gekennzeichnet, dass** die Markierung (4) innerhalb eines Eckbereiches der Stirnfläche (5) oder mittig innerhalb der Stirnfläche (5) angeordnet ist.
